# EUROPÄISCHE PATENTSCHRIFT

(11) **EP 0 935 423 B1**
(45) Veröffentlichungstag und Bekanntmachung des Hinweises auf die Patenterteilung: **21.08.2002**
(21) Anmeldenummer: 97948800.4
(22) Anmeldetag: 24.10.1997
(51) Int. Cl.: A22C 13/00

(54) **MANUELL ABFÜLLBARE WURSTHÜLLE AUF POLYAMIDBASIS**
POLYAMIDE-BASED SAUSAGE SKIN WHICH CAN BE FILLED MANUALLY
BOYAU ARTIFICIEL POUR SAUCISSES A BASE DE POLYAMIDE, POUVANT ETRE REMPLI MANUELLEMENT

(30) Priorität: 02.11.1996 DE 19645276
(43) Veröffentlichungstag der Anmeldung: 18.08.1999
(73) Patentinhaber: Kalle Nalo GmbH & Co. KG, 65203 Wiesbaden (DE)
(72) Erfinder: DELIUS, Ulrich, D-60529 Frankfurt (DE)
(74) Vertreter: Zounek, Nikolai, Dipl.-Ing.
(86) Internationale Anmeldenummer: EP9705890
(87) Internationale Veröffentlichungsnummer: WO98019551

(56) Entgegenhaltungen:
- EP-A- 0 065 278
- EP-A- 0 116 288
- EP-A- 0 473 091
- EP-A- 0 737 709
- WO-A-96/17003
- DE-A- 3 227 945
- US-A- 4 501 861

## Beschreibung

Die vorliegende Erfindung betrifft eine Wursthülle auf Polyamidbasis. Sie ist insbesondere für die Wurstherstellung in kleinerem Maßstab gedacht, bei der nicht automatisch, sondern manuell abgefüllt wird. Geeignet ist sie speziell für Koch- und Brühwürste.

Faserverstärkte Cellulosehüllen, die nach dem Viskoseverfahren hergestellt und mit einer wasserundurchlässigen Innenbeschichtung versehen sind, haben den größten Anteil bei der Herstellung von Koch- und Brühwürsten. An zweiter Stelle folgen die Hüllen aus thermoplastischen Kunststoffen, insbesondere aus Polyamid oder Vinylidenchlorid-Copolymeren. Für die Wurstherstellung im handwerklichen Maßstab sind die innenbeschichteten, faserverstärkten Cellulosehüllen wesentlich besser geeignet als die Hüllen aus thermoplastischen Kunststoffen.

Koch- und Brühwürste werden nach dem Füllen in Wasser oder Wasserdampf bei etwa 80 °C, gelegentlich auch bei 110 bis 130 °C, gebrüht. Dabei nimmt das Volumen des Wurstbräts zu. Beim Abkühlen nimmt es dann wieder deutlich ab. Die Wursthülle muß sich dem verändernden Volumen des Wurstbräts anpassen. Insbesondere soll sie sich beim Abkühlen soweit zusammenziehen, daß keine Falten entstehen. Denn Wurst mit einer faltigen Hülle wird allgemein als "nicht mehr frisch" angesehen. Darüber hinaus sollte die Hülle soviel Spannung aufweisen, daß sich darunter nach dem Brühen keine Flüssigkeit ansammelt. Ein solcher "Gelee-Absatz" zwischen Hülle und Brät wird ebenfalls als Qualitätsmangel angesehen.

Die genannten innenbeschichteten Cellulosehüllen werden üblicherweise vor dem Füllen eingeweicht. Dabei sättigt sich die stark hygroskopische Cellulose mit Wasser. Die Wasseraufnahme liegt im allgemeinen bei 110 bis 140 Gew.-%. Gleichzeitig dehnt sich die Hülle aus ("Quellung") und wird sehr geschmeidig. In diesem Zustand wird sie mit dem Brät gefüllt. Nach dem Brühen und Abkühlen wird die Wurst getrocknet. Dabei gibt die Hülle den größten Teil des aufgenommenen Wassers wieder ab. Wegen der undurchlässigen Innenbeschichtung kann jedoch praktisch keine Feuchtigkeit aus dem Wurstbrät entweichen. Während des Trocknens zieht sich die Celluloseschicht stark zusammen, so daß die Hülle das erkaltete Wurstbrät straff umspannt. Falten und Geleeabsatz werden so verhindert, selbst wenn das Brät - wie bei manueller Abfüllung üblich - drucklos oder mit nur geringem Druck eingefüllt wurde.

Von ihren Anwendungseigenschaften her sind die innenbeschichteten Cellulosehüllen für die manuelle Abfüllung ideal. Nachteilig an diesen Hüllen ist jedoch die aufwendige und teure Herstellung nach dem Viskoseverfahren. Dabei wird zunächst eine Cellulosexanthogenatlösung auf die zu einem Schlauch vorgeformte Faserverstärkung aufgebracht. Anschließend wird das Cellulosexanthogenat in verdünnter Schwefelsäure gefällt und zu Cellulosehydrat regeneriert. Nach dem Waschen und Trocknen der Hülle wird auf ihre Innenseite eine Polymerdispersion aufgebracht, die dann die wasserundurchlässige Beschichtung ergibt.

Sehr viel einfacher und kostengünstiger lassen sich dagegen Koch- und Brühwursthüllen durch Blasextrusion von thermoplastischen Kunststoffen herstellen. Einige Bedeutung haben hier Hüllen aus biaxial verstrecktem Polyamid erlangt. So ist in der DE-A 28 50 182 (= GB-A 2 035 198) eine einschichtige, biaxial verstreckte Hülle aus einem aliphatischen Polyamid beschrieben, dessen Glasumwandlungspunkt im trockenen Zustand mindestens 48 °C beträgt und sich nach Wasseraufnahme bis auf mindestens 3 °C, bevorzugt bis auf -5 C°, erniedrigen läßt. Konkret offenbart sind Polyamid-6 (= Polycaprolactam), Polyamid-7, Polyamid-6,6 (= Polyamid aus Hexamethylendiamin und Adipinsäure) und Polyamid-6,10 (= Polyamid aus Hexamethylendiamin und Sebacinsäure). Gemäß der DE-A 28 50 181 enthält die Hülle daneben noch ein lonomerharz, ein modifiziertes Ethylen-Vinylacetat-Copolymer und/ oder ein quartäres Copolymer mit Einheiten aus Ethylen, Butylen, einer aliphatischen, ethylenisch ungesättigten (C₃-C₅)Carbonsäure und einem Ester dieser Carbonsäure mit einem (C₁-C₈)Alkanol. Diese Hülle zeigt nach dem Anschneiden der Wurst eine verminderte Neigung zum Weiterreißen. Den gleichen Vorteil soll die Polyamidhülle gemäß der DE-A 32 27 945 (= US-A 4 560 520 und 4 601 929) aufweisen.

In der EP-A 0 065 278 ist eine ein- oder mehrschichtige, schrumpffähige Flachfolie offenbart, bei der die Schicht bzw. mindestens eine Schicht aus Polyamid besteht. Die Polyamidschicht enthält ein lineares, aliphatisches (Co-)Polyamid sowie ein teilaromatisches (Co-)Polyamid. Das lineare, aliphatische (Co-)Polyamid kann teilweise oder vollständig ersetzt sein durch eine elastomere Komponente, wie Polybutadien, Polyurethankautschuk oder Nitrilkautschuk. Die Folie wird zusätzlich verstreckt, jedoch nicht thermofixiert, denn sie soll eine hohe Schrumpffähigkeit und hohe Schrumpfkraft aufweisen. Diese Eigenschaften werden von der speziellen Polymerkombination in der Polyamidschicht bewirkt.

Damit die fertigen Koch- und Brühwürste bei der Lagerung möglichst wenig Gewicht verlieren, ist auch bei den Hüllen aus thermoplastischen Kunststoffen eine möglichst geringe Durchlässigkeit für Wasser oder Wasserdampf erwünscht. Viele Polyamide können jedoch bis zu 10 Gew.-% an Wasser aufnehmen. Reine Polyamidhüllen sind daher weniger geeignet. Um diesen Nachteil auszugleichen, wurden mehrschichtige Hüllen entwickelt, die zusätzlich (mindestens) eine Schicht aus einem wasserdampfundurchlässigen Polymer enthalten. So besteht die biaxial verstreckte Hülle gemäß der EP-A 573 306 aus einer mittleren Polyamidschicht sowie einer inneren und einer äußeren Schicht aus einem wasserdampfsperrenden Polymer, z.B. einem Polyolefin. In der DE-A 40 17 046 ist ebenfalls eine dreischichtige, biaxial verstreckte und thermofixierte Hülle offenbart. Hier besteht die äußere Schicht aus aliphatischem Polyamid und/oder Copolyamid, die mittlere aus Polyolefin und einer haftvermittelnden Komponente und die innere aus aliphatischem und/oder teilaromatischem (Co-)Polyamid.

Beim Erhitzen auf Temperaturen von etwa 80 °C oder mehr, wie sie beim Brühen der Wurst erreicht werden, beginnen die Hüllen zu schrumpfen. Durch diesen. Thermoschrumpf vermindert sich der Umfang der Hülle allgemein um 5 bis 20%. Das Ausmaß der Kontraktion hängt dabei auch von den Bedingungen bei der vorangegangenen Thermofixierung ab. Üblicherweise findet während der Thermofixierung bereits eine Querschrumpfung des Schlauches von bis zu 40% statt. Gleichzeitig wird der Durchmesser des Schlauches gleichmäßiger. Beim Brühen der Wurst setzt der Thermoschrumpf praktisch sofort ein. Das führt dazu, daß die Spannung der Hülle zu Beginn des Brühvorgangs am größten ist, während das Brät in dieser Phase noch expandiert. Dadurch kann eine bleibende Verdehnung der Hülle eintreten, die dazu führt, daß deren Spannung in der abgekühlten Wurst nicht mehr ausreicht. Hinzu kommt, daß Schichten aus orientiertem Polyamid nur eine relativ geringe Restelastizität besitzen.

Bei der Wurstherstellung in industriellem Maßstab wird dieses Problem gelöst, indem man das Brät unter hohem Druck einfüllt. Üblich ist, je nach Kaliber der Wursthülle, ein Fülldruck von 20 bis 40 kPa. Dafür sind jedoch speziell konstruierte Füllmaschinen erforderlich. Auf diese Weise wird eine erste (teil)-elastische Aufdehnung der Hülle erreicht. Die dabei entstehende Rückstellkraft wird - wie auch die Thermoschrumpfkraft - während des Brühens teilweise abgebaut. Die verbleibende Kraft reicht dann in der Regel gerade noch aus, um ein straffes und faltenfreies Anliegen der Hülle zu gewährleisten.

Ohne spezielle Füllmaschinen läßt sich ein hoher Fülldruck jedoch nicht erreichen. Manuell abgefüllte Polyamidhüllen sind daher nach dem Brühen und Abkühlen meist faltig und wenig ansehnlich. Daher werden im handwerklichen Bereich nach wie vor die eingangs beschriebenen innenbeschichteten Cellulosehüllen eingesetzt.

Es bestand daher die Aufgabe, eine durch Blasextrusion aus thermoplastischen Kunststoffen herstellbare Hülle für Koch- und Brühwürste zu entwickeln, die auch dann faltenfrei anliegt, wenn das Brät drucklos oder mit wenig Druck eingefüllt wurde, also per Hand und ohne Verwendung von speziellen Füllmaschinen.

Gelöst wird die Aufgabe durch eine biaxial verstreckte und thermofixierte, schlauchförmige, nahtlose, ein- oder mehrschichtige Nahrungsmittelhülle, bei der die Schicht bzw. bei Mehrschichthüllen mindestens eine der Schichten ein Blockcopolymer mit "harten", aliphatischen Polyamidblöcken und "weichen", aliphatischen Polyetherblöcken enthält, das einer der Formeln I bis III entspricht:

Eₐ-(NH-[CH₂]ₓ-CO)ₘ-Xₐ-(A-O)ₙ-A-Xₐ-(CO-[CH₂]ₓ-NH)ₘ-Eₐ (I)

worin
- A: ein Alkandiylrest der Formel -CH₂-CH₂- (= Ethan-1,2-diyl),
-CH₂-CH(CH₃)- (= Propan-1,2-diyl) oder -(CH₂)₄- (= Butan-1,4-diyl),
- Xₐ: -O- oder -NH-,
- Eₐ: H, (C₂-C₈)Alkanoyl, Benzoyl oder Phenylacetyl,
CO-N([CH₂]ₓ₋₁-CH₃)-CO-(C₁-C₄)Alkyl,
CO-N([CH₂]ₓ₋₁-CH₃)-CO-C₆H₅ oder CO-N([CH₂]ₓ₋₁-CH₃)-CO-CH₂-C₆H₅,
- x: eine ganze Zahl von 5 bis 11,
- m: eine ganze Zahl von 30 bis 200 und
- n: eine ganze Zahl von 4 bis 60 ist; 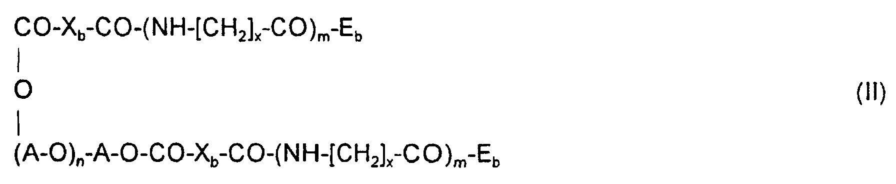
worin
- X_{b}: ein Alkandiylrest der Formel -[CH₂]_{z}-,
wobei z eine ganze Zahl von 4 bis 10 ist,
*meta*- oder *para*-Phenylen,
-NH-(C₁-C₆)Alkyl-NH-,
- NH-C₆H₃-(CH₃)-NH-
〉N-[CH₂]ₓ₋₁-CH₃, -[CH₂]_{z}-CO-N([CH₂]ₓ₋₁-CH₃)- oder -C₆H₄-CO-N([CH₂]ₓ₋₁-CH₃)-,
wobei C₆H₄ *meta*- oder *para*-Phenylen darstellt,
- E_{b}: -OH, -O-(C₁-C₇)Alkyl, -O-Phenyl oder 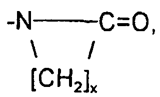 und
A, m und n die oben angegebene Bedeutung haben;

-[Xₐ-(CO-[CH₂]ₓ-NH)ₒ-Y-Xₐ-(A-O)ₚ-A]- (III)

worin
- Y: für -CO-, -CO-[CH₂]_{z}-CO- oder -CO-C₆H₄-CO- steht,
wobei C₆H₄ *meta*- oder *para*-Phenylen darstellt, oder für -CO-N([CH₂]ₓ₋₁-CH₃)-CO-,
-CO-N([CH₂]ₓ₋₁-CH₃)-CO-[CH₂]_{z}-CO-N([CH₂]ₓ₋₁-CH₃)-CO-bzw.
-CO-N([CH₂]ₓ₋₁-CH₃)-CO-C₆H₄-CO-N([CH₂]ₓ₋₁-CH₃)-CO-,
wobei C₆H₄ die angegebene Bedeutung hat,
- o: eine ganze Zahl von 10 bis 150 und
- p: eine ganze Zahl von 4 bis 100 ist und
A, Xₐ, x und z die oben angegebene Bedeutung haben.

Die "harten" Polyamidblöcke in dem Blockcopolymer der Formeln l bis III haben allgemein eine Glas-Übergangstemperatur (T_{g}) von 20 bis 80 °C, während die "weichen" Polyetherblöcke eine T_{g} von -100 bis -20 °C aufweisen. Die Laufzahl x ist bevorzugt 5, d.h. die Polyamidblöcke sind bevorzugt Polycaprolactamblöcke, während A bevorzugt Ethan-1,2-diyl oder Butan-1,4-diyl darstellt, d.h. die Polyetherblöcke sind bevorzugt Polyethylenglykol- oder Polybutylenglykolblöcke. Das Blockcopolymer der Formel III, in dem die harten und weichen Blöcke in alternierender Folge auftreten, hat allgemein ein mittleres Molekulargewicht M_{w} von 20.000 bis 70.000.

Von den Blockcopolymeren der Formeln l und II sind solche mit m = 40 bis 100 und n = 10 bis 40 bevorzugt. Von den Blockcopolymeren der Formel III sind wiederum solche mit o = 10 bis 60 und p = 20 bis 40 bevorzugt.

Besonders bevorzugt sind Blockcopolymere der Formel I, in denen Xₐ =-NHist, und Blockcopolymere der Formel III, in denen Xₐ = -O- und Y =-CO-[CH₂]₄-CO- oder -CO-[CH₂]₁₀-CO- ist.

Die Blockcoplymere der Formeln I, II und III sind als solche bekannt und in der US-A 4 501 861 beschrieben.

In einer besonderen Ausführungsform enthält diese Schicht darüber hinaus noch mindestens ein aliphatisches und/oder teilaromatisches (Co-)Polyamid, vermischt mit den Blockcopolymeren. Bevorzugte (Co-)Polyamide dieser Art sind Polyamid-6 (PA-6), PA-6/6,6 (= Copolyamid aus ε-Caprolactam, Hexamethylendiamin und Adipinsäure), PA-6/12 (= Copolyamid aus ε-Caprolactam und ω-Amino-laurinsäurelactam), PA-12 (= Poly(ω-Amino-laurinsäurelactam) und PA-6I/6T (= Copolyamid aus Hexamethylendiamin, Isophthalsäure und Terephthalsäure). Der Anteil der zusätzlichen Polymere in dieser Schicht liegt bei bis zu 85 Gew.-%, bezogen auf das Gesamtgewicht der Schicht.

Die Schicht mit den Blockcopolymeren der Formeln I, II und/oder III kann außerdem noch durch den Zusatz von anorganischen oder organischen Pigmenten eingefärbt sein. Schließlich können auch noch weitere Zusätze vorhanden sein, insbesondere Antiblockmittel und Mittel, die die Verarbeitungseigenschaften verbessern.

Hergestellt wird die erfindungsgemäße Nahrungsmittelhülle durch Blasextrusion. Entsprechende Verfahren sind dem Fachmann an sich geläufig. Allgemein wird darin das Polymer(gemisch) zunächst zu einer homogenen Schmelze plastifiziert und dann durch eine beheizte Ringdüse extrudiert. Auf diese Weise erhält man eine nahtlose Hülle. Der bei der Extrusion erhaltene, relativ dicke Schlauch wird zunächst schnell abgekühlt, um die Polymere im amorphen Zustand zu erhalten. Er wird dann auf die zum Verstrecken erforderliche Temperatur erwärmt und durch Blasformen verstreckt. Dabei wird der Schlauch durch den Druck eines innen befindlichen Gases (normalerweise Luft) aufgeweitet. Anschließend wird der verstreckte Schlauch teilweise thermofixiert, so daß ein Restschrumpf im Bereich von 5 bis 20 % bei 80 °C verbleibt. Dabei reduziert sich das Streckverhältnis geringfügig. Das Flächenstreckverhältnis der thermofixierten Hülle liegt allgemein bei etwa 6 bis 10.

Eine Hülle mit etwas ungünstigeren Schrumpfeigenschaften und leicht verminderter Festigkeit erhält man, wenn der Schlauch unmittelbar nach Verlassen der Ringdüse blasverformt und anschließend ebenfalls (teilweise) thermofixiert wird. Nach dem Abkühlen werden die Hüllen üblicherweise flachgelegt und aufgerollt.

Für spezielle Anwendungen, z.B. wenn eine Hülle mit erhöhter Wasserdampfsperre gewünscht wird, sind mehrschichtige Hüllen von Vorteil. Die zusätzlichen Schichten bestehen bevorzugt aus Polyamiden (z.B. PA-6) oder Polyolefinen (z.B. Polyethylen oder Polypropylen). Die Polyolefine können dabei auch haftvermittelnde funktionelle Gruppen tragen. Weiterhin können die zusätzlichen Schichten aus (Co-)Polymeren mit Einheiten aus ethylenisch ungesättigten Monomeren (z.B. Vinylacetat, Vinylalkohol oder (Meth)-acrylsäure), aus Vinylidenchlorid- oder Acrylnitrilcopolymeren, aus lonomerharzen oder Mischungen der genannten (Co-)Polymere bestehen.

Bei der zweischichtigen Hülle gemäß der vorliegenden Erfindung befindet sich die zusätzliche Schicht vorzugsweise innen. Ist die erfindungsgemäße Hülle dreischichtig, enthält vorzugsweise die äußere Schicht die Blockcopolymere der Formeln I, II und/oder III. Die erfindungsgemäße Mehrschichthülle umfaßt normalerweise nicht mehr als 5 Schichten.

Die mehrschichtigen Hüllen werden allgemein durch Coextrusion hergestellt. Die Coextrusionsdüsen werden mit zunehmender Zahl der zu extrudierenden Schichten technisch immer aufwendiger und kostspieliger, was die Zahl der Schichten begrenzt. Blasverformung und (teilweise) Thermofixierung folgen dann, wie bereits beschrieben.

Die erfindungsgemäße Hülle zeigt unter den Bedingungen, die beim Brühen von Koch- und Brühwurst allgemein erreicht werden, einen hohen Schrumpf. Sie besitzt in etwa "kautschukartige" Rückstelleigenschaften. Die damit - ohne Einsatz von Füllmaschinen - hergestellten Würste sind nach dem Brühen und Abkühlen prall und faltenfrei.

In den folgenden Beispielen steht Gt für Gewichtsteile. Prozente sind, soweit nicht anders angegeben, Gewichtsprozente.

### Beispiel 1:

Ein Gemisch aus
- 70 Gt: Polyamid 6 (die relative Viskosität einer 1 %igen Lösung des Polyamids in 96 %iger Schwefelsäure betrug 4) und
- 30 Gt: eines Blockcopolymers mit Polypropylenglykol-Blöcken und Polycaprolactam-Blöcken (®Grilon ELX 2112 der Ems-Chemie AG), dessen Schmelzpunkt bei 209 °C lag (bestimmt durch DSC = differential scanning calorimetry)
wurde in einem Einschneckenextruder bei 240 °C zu einer homogenen Schmelze plastifiziert und durch eine Ringdüse zu einem Schlauch mit einem Durchmesser von 18 mm extrudiert. Der Schlauch wurde schnell abgekühlt, dann auf die zum Verstrecken erforderliche Temperatur gebracht, durch Blasformen verstreckt und schließlich thermofixiert, wobei sich das Streckverhältnis in Querrichtung um 5 % reduzierte, während es in Längsrichtung unverändert blieb. Das Flächenstreckverhältnis betrug 8,7. Die fertige Hülle hatte einen Durchmesser von 60 mm.

### Beispiel 2:

Ein Gemisch aus
- 50 Gt: Polyamid 6 (wie im Beispiel 1),
- 30 Gt: eines Blockcopolymers aus Poly(butan-1,4-diol)-Blöcken und Polylaurinlactam-Blöcken (®Pebax 5533 SN01 der Elf Atochem S.A.), das einen Schmelzindex von 5 g/10 min bei 235 °C und 1 kg Belastung aufwies, und
- 20 Gt: Polyamid 6/12 (®Grilon CF6S der Ems Chemie AG), das einen Schmelzindex von 50 g/10 min bei 190 °C und 10 kg Belastung aufwies,
wurde - wie im Beispiel 1 beschrieben - zu einem Schlauch mit einem Durchmesser von 19 mm extrudiert, verstreckt und thermofixiert. Das Flächenstreckverhältnis betrug 8,3. Die fertige Wursthülle hatte wiederum einen Durchmesser von 60 mm.

### Beispiel 3:

Zur Herstellung einer dreischichtigen Wursthülle wurden die folgenden Gemische bereitgestellt:
Gemisch A:
   - 90 Gt: Polyamid 6 (wie im Beispiel 1) und
   - 10 Gt: des auch im Beispiel 1 eingesetzten Blockcopolymers;
Gemisch B:
   - 70 Gt: LDPE (Polyethylen niederer Dichte), das einen Schmelzindex von 0,2 g/10 min bei 190 °C und 2,1 6 kg Belastung auswies (®Lupolen 2441D der BASF AG), und
   - 30 Gt: LLDPE (lineares Polyethylen niederer Dichte), das durch Modifizieren mit Maleinsäureanhydrid haftvermittelnd gegenüber Polyamid ausgerüstet ist und einen Schmelzindex von 3 g/10 min bei 190 °C und 2,16 kg Belastung aufwies (®Escor CTR 2000 der Exxon);
Gemisch C:
   - 85 Gt: Polyamid 6 (wie im Beispiel 1) und
   - 15 Gt: amorphes Polyamid 6I/6T, das einen Schmelzindex von 90 g/10 min bei 275 °C und 10 kg Belastung aufwies (®Selar PA 3426 der Du Pont de Nemours Inc.).

Die Gemische wurden in drei Einschnecken-Extrudern bei jeweils 240 °C zu homogenen Schmelzen plastifiziert, anschließend in einer Dreischicht-Ringdüse zusammengeführt und zu einem dreischichtigen Schlauch mit einem Durchmesser von 29 mm coextrudiert. Der Schlauch wurde dann, wie beschrieben, verstreckt und thermofixiert. Bei der Thermofixierung verminderte sich das Querstreckverhältnis um 20 %. Das Flächenstreckverhältnis betrug danach 8,7. Der Durchmesser der fertigen Wursthülle lag bei 80 mm. Die Gesamtwandstärke der Hülle lag bei 54 µm. Darin hatte die äußere Schicht (aus dem Gemisch A) eine Dicke von 34 µm, die mittlere Schicht (aus dem Gemisch B) von 16 µm und die innere Schicht (aus dem Gemisch C) von 4 µm.

### Beispiel 4:

Beispiel 3 wurde wiederholt mit der einzigen Änderung, daß anstelle des dort verwendeten Gemisches A ein Gemisch A aus
- 70 Gt: Polyamid 6 (wie im Beispiel 1) und
- 30 Gt: des Blockcopolymers gemäß Beispiel 1
eingesetzt wurde.

Wie im Beispiel 3 beschrieben, wurde ein dreischichtiger Schlauch mit einem Durchmesser von 28 mm coextrudiert, verstreckt und thermofixiert. Das Flächenstreckverhältnis lag bei 9. Der Durchmesser der fertigen Hülle betrug 80 mm. Bei einer Gesamtwandstärke der Hülle von 51 µm hatte die äußere Schicht (aus dem Gemisch A) eine Dicke von 30 µm, die mittlere Schicht (aus dem Gemisch B) eine Dicke von 15 µm und die innere Schicht (aus dem Gemisch C) eine Dicke von 6 µm.

### Beispiel 5:

Beispiel 3 wurde wiederholt mit der einzigen Änderung, daß anstelle des dort eingesetzten Gemisches A ein Gemisch A aus
- 65 Gt: Polyamid 6 (wie im Beispiel 1),
- 20 Gt: des auch im Beispiel 2 verwendeten Blockcopolymers und
- 15 Gt: Polyamid 6/12 (wie im Beispiel 2)
verwendet wurde. Der Durchmesser der fertigen Hülle betrug 80 mm, ihr Flächenstreckverhältnis lag bei 7,9. Bei einer Gesamtwandstärke der Hülle von 56 µm hatte die äußere Schicht (aus dem Gemisch A) eine Dicke von 35 µm, die mittlere (aus dem Gemisch B) eine Dicke von 15 µm und die innere (aus dem Gemisch C) eine Dicke von 6 µm.

### Beispiel 6:

Beispiel 3 wurde wiederholt mit der einzigen Änderung, daß anstelle des dort verwendeten Gemisches A ein Gemisch A aus
- 50 Gt: Polyamid 6 (wie im Beispiel 19,
- 30 Gt: des auch im Beispiel 2 verwendeten Blockcopolymers und
- 20 Gt: Polyamid 6/12 (wie im Beispiel 2)
eingesetzt wurde. Der Durchmesser der fertigen Hülle lag bei 80 mm. Das Flächenstreckverhältnis betrug 9,0. Bei einer Gesamtwandstärke der Hülle von 52 µm hatte die äußere Schicht (aus dem Gemisch A) eine Dicke von 32 µm, die mittlere (aus dem Gemisch B) eine Dicke von 14 µm und die innere (aus dem Gemisch C) eine Dicke von 6 µm.

### Vergleichsbeispiel 1:

Gemäß der DE-A 28 50 182 wurde das auch im Beispiel 1 verwendete Polyamid 6 nach dem dort angegebenen Verfahren zu einem Schlauch mit einem Durchmesser von 19 mm extrudiert, der dann wie beschrieben verstreckt und thermofixiert wurde. Das Flächenstreckverhältnis der fertigen Hülle lag bei 8,3, ihr Durchmesser betrug 60 mm.

### Vergleichsbeispiel 2:

Gemäß der DE-A 40 17 046 wurden
- Komponente A:: Polyamid 6 (wie im Beispiel 1),
- Gemisch B :: identisch mit Gemisch B im Beispiel 3 und
- Gemisch C:: identisch mit Gemisch C im Beispiel 3
wie dort beschrieben zu einem Schlauch mit einem Durchmesser von 29 mm coextrudiert, verstreckt und thermofixiert. Bei der Thermofixierung verringerte sich das Querstreckverhältnis um 20 %. Das Flächenstreckverhältnis der fertigen Hülle lag bei 7,9, ihr Durchmesser betrug 52 mm. Bei einer Gesamtwandstärke der Hülle von 52 µm hatte die äußere Schicht (aus der Komponente A) eine Dicke von 31 µm, die mittlere (aus dem Gemisch B) eine Dicke von 13 µm und die innere (aus dem Gemisch C) eine Dicke von 8 µm.

Die Meßwerte in der folgenden Tabelle zeigen die Überlegenheit der erfindungsgemäßen Hülle gegenüber den aus dem Stand der Technik bekannten, In der Tabelle bedeutet:
1) gemessen nach DIN 53 455 an einem 30 min lang gewässerten Streifen von 15 mm Breite bei einer Einspannlänge von 50 mm;
2) bezeichnet die Zugspannung, die bei der Prüfung nach DIN 53 455 angewendet werden muß, um den 30 min lang gewässerten Streifen von 15 mm Breite bei der Einspannlänge von 50 mm und einer Dehnungsgeschwindigkeit von 50 mm/min um 5 % zu dehnen;
3) prozentuale Zunahme des äußeren Umfangs von Schlauchabschnitten, die zuvor 30 min lang gewässert und anschließend bis zum Erreichen des angegebenen Innendrucks aufgeblasen worden sind;
4) nach 15 min Lagerung in Wasser von 80 °C;
5) Die Hülle wurde einseitig mit Luft einer relative Feuchte (r.H.) von 85 % bei 20 °C beaufschlagt. Die Messung der Wasserdampfdurchlässigkeit erfolgte nach DIN 53 122.
6) subjektive Beurteilung einer 30 min lang gewässerten Hülle. Die Zahlen bedeuten: 1: extrem weich; 2 = sehr weich; 3 = weich und 4 = mittel.
7) Die Hülle wurde per Hand mit feinkörnigem Brühwurstbrät bei konstantem, geringen Fülldruck gefüllt und mit Metallclips verschlossen. Anschließend wurden die Würste in einem Brühschrank 60 min lang bei 78 °C und 100 % r.H. gegart. Nach dem Abkühlen auf 7 °C wurden Aussehen und Konsistenz beurteilt.

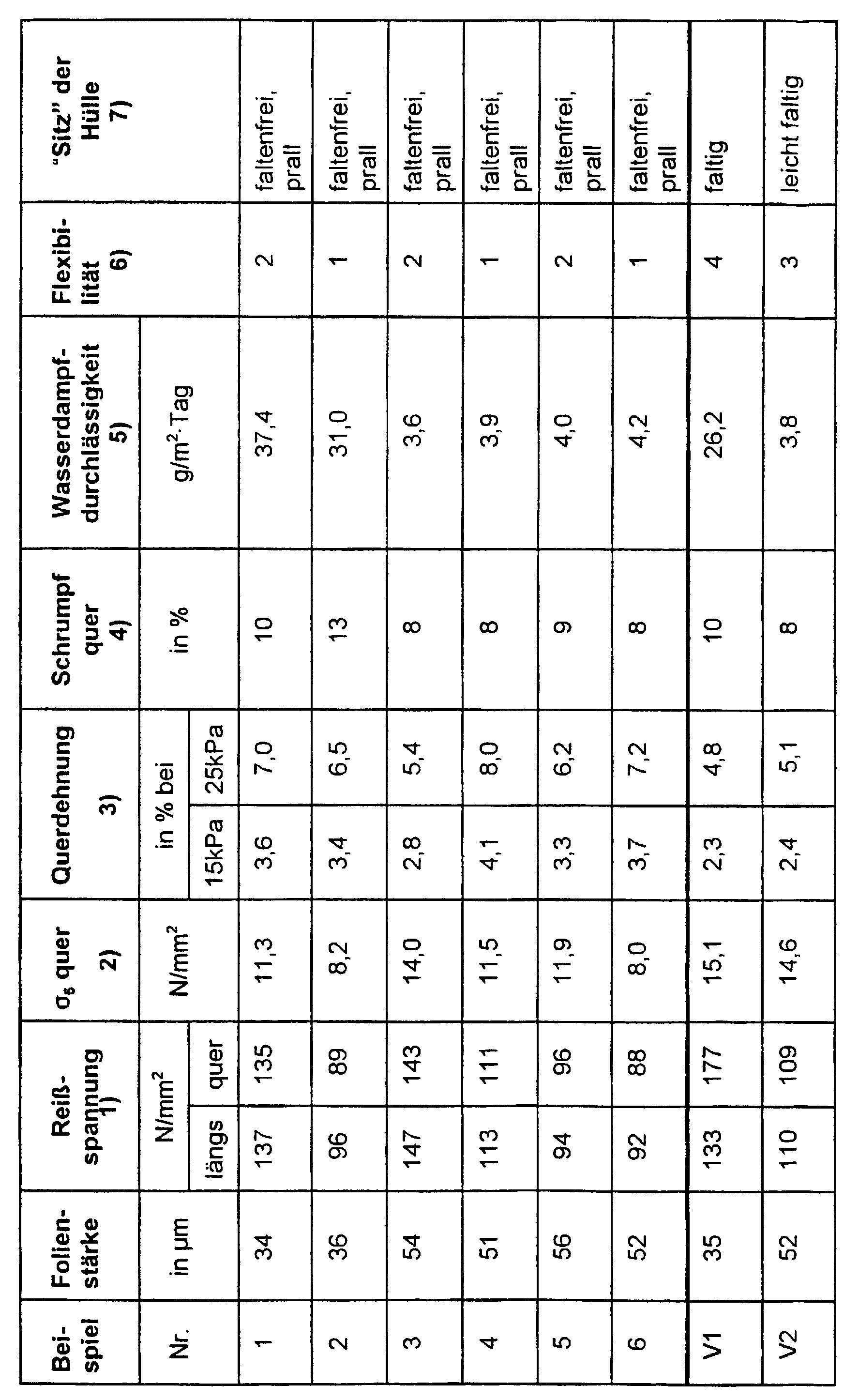

## Patentansprüche

1. Biaxial verstreckte und thermofixierte, schlauchförmige, nahtlose, einoder mehrschichtige Nahrungsmittelhülle, bei der die Schicht bzw. bei Mehrschichthüllen mindestens eine der Schichten ein Blockcopolymer mit "harten", aliphatischen Polyamidblöcken und "weichen", aliphatischen Polyetherblöcken enthält, das einer der Formeln I bis III entspricht:
Eₐ-(NH-[CH₂]ₓ-CO)ₘ-Xₐ-(A-O)ₙ-A-Xₐ-(CO-[CH₂]ₓ-NH)ₘ-Eₐ (I)
worin
A ein Alkandiylrest der Formel -CH₂-CH₂- (= Ethan-1,2-diyl),
-CH₂-CH(CH₃)- (= Propan-1,2-diyl) oder -(CH₂)₄- (= Butan-1,4-diyl),
Xₐ -O- oder -NH-,
Eₐ H, (C₂-C₈)Alkanoyl, Benzoyl oder Phenylacetyl,
CO-N([CH₂]ₓ₋₁-CH₃)-CO-(C₁-C₄)Alkyl,
CO-N([CH₂]ₓ₋₁-CH₃)-CO-C₆H₅ oder CO-N([CH₂]ₓ₋₁-CH₃)-CO-CH₂-C₆H₅,
x eine ganze Zahl von 5 bis 11,
m eine ganze Zahl von 30 bis 200 und
n eine ganze Zahl von 4 bis 60 ist; 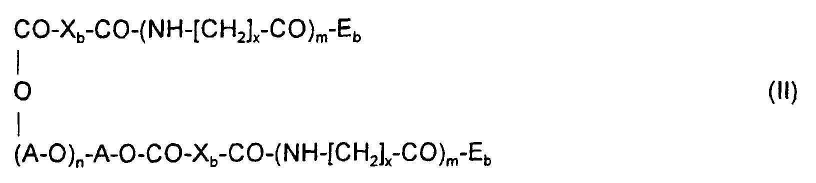
worin
X_{b} ein Alkandiylrest der Formel -[CH₂]_{z}-,
wobei z eine ganze Zahl von 4 bis 10 ist,
*meta*- oder *para*-Phenylen,
-NH-(C₁-C₆)Alkyl-NH-,
-NH-C₆H₃-(CH₃)-NH-,
〉N-[CH₂]ₓ₋₁-CH₃, -[CH₂]_{z}-CO-N([CH₂]ₓ₋₁-CH₃)- oder -C₆H₄-CO-N([CH₂]ₓ₋₁-CH₃)-,
wobei C₆H₄ *meta-* oder *para*-Phenylen darstellt,
E_{b} -OH, -O-(C₁-C₇)Alkyl, -O-Phenyl oder 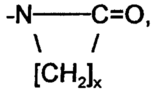 und
A, m und n die oben angegebene Bedeutung haben;
-[Xₐ-(CO-[CH₂]ₓ-NH)ₒ-Y-Xₐ-(A-O)ₚ-A]- (III)
worin
Y für -CO-, -CO-[CH₂]_{z}-CO- oder -CO-C₆H₄-CO- steht, wobei C₆H₄
*meta*- oder para-Phenylen darstellt, oder für -CO-N([CH₂]ₓ₋₁-CH₃)-CO-,
-CO-N([CH₂]ₓ₋₁-CH₃)-CO-[CH₂]_{z}-CO-N([CH₂]ₓ₋₁-CH₃)-CO-bzw.
-CO-N([CH₂]ₓ₋₁-CH₃)-CO-C₆H₄-CO-N([CH₂]ₓ₋₁-CH₃)-CO-, wobei C₆H₄ die angegebene Bedeutung hat,
o eine ganze Zahl von 10 bis 150 und
p eine ganze Zahl von 4 bis 100 ist und
A, X_{a,} x und z die oben angegebene Bedeutung haben.

2. Nahrungsmittelhülle gemäß Anspruch 1, **dadurch gekennzeichnet, daß** die harten Polyamidblöcke in den Blockcopolymeren der Formeln I bis III eine Glas-Übergangstemperatur (T_{g}) von 20 bis 80 °C und die weichen Polyetherblöcke eine T_{g} von -100 bis -20 °C aufweisen.

3. Nahrungsmittelhülle gemäß Anspruch 1 oder 2, **dadurch gekennzeichnet, daß** die Polyamidblöcke Polycaprolactamblöcke sind, und die Polyetherblöcke Polyethylenglykol- oder Polybutylenglykolblöcke sind.

4. Nahrungsmittelhülle gemäß Anspruch 1 oder 2, **dadurch gekennzeichnet, daß** in den Blockcopolymeren der Formeln I und II m = 40 bis 100 und n = 10 bis 40 ist, und in den Blockcopolymeren der Formel III o = 10 bis 60 und p = 20 bis 40 ist.

5. Nahrungsmittelhülle gemäß einem oder mehreren der Ansprüche 1 bis 4, **dadurch gekennzeichnet, daß** die Schicht mindestens ein aliphatisches und/oder teilaromatisches (Co-)Polyamid, vermischt mit den übrigen Bestandteilen, enthält.

6. Nahrungsmittelhülle gemäß Anspruch 5, **dadurch gekennzeichnet, daß** das (Co-)Polyamid Polyamid-6, Polyamid-6/6,6, Polyamid-6/12, Polyamid-12 oder Polyamid-6I/6T ist.

7. Nahrungsmittelhülle gemäß Anspruch 5 oder 6, dadurch gekennzeichent, daß der Anteil des (Co-)Polyamids bei bis zu 85 Gew.-%, bezogen auf das Gesamtgewicht der Schicht, liegt.

8. Nahrungsmittelhülle gemäß einem oder mehreren der Ansprüche 1 bis 7, **dadurch gekennzeichnet, daß** die Schicht anorganische oder organische Pigmente enthält.

9. Nahrungsmittelhülle gemäß Anspruch 1 oder 2, durch gekennzeichnet, daß sie mehrschichtig ist und die weiteren Schichten aus Polyamiden oder Polyolefinen bestehen.

10. Nahrungsmittelhülle gemäß Anspruch 1 oder 2, **dadurch gekennzeichnet, daß** sie durch Blasformen verstreckt ist und durch eine beheizte Ringdüse extrudiert wird.

11. Nahrungsmittelhülle gemäß Anspruch 1 oder 2, **dadurch gekennzeichnet, daß** sie ein Flächenstreckverhältnis von etwa 6 bis 10 aufweist.

## Claims

1. A biaxially stretched and thermoset, tubular, seamless, single-layer or multiple-layer food casing in which the layer or, in the case of multiple-layer casings, at least one of the layers comprises a block copolymer containing "hard" aliphatic polyamide blocks and "soft" aliphatic polyether blocks, which block copolymer corresponds to one of the formulae I to III
Eₐ-(NH-[CH₂]ₓ-CO)ₘ-Xₐ-(A-O)ₙ-A-Xₐ-(CO-[CH₂]ₓ-NH)ₘ-Eₐ (I)
where
A is an alkanediyl radical of the formula -CH₂-CH₂- (= ethane-1,2-diyl),
-CH₂-CH(CH₃)- (= propane-1,2-diyl) or -(CH₂)₄-(= butane-1,4-diyl),
Xₐ is -O- or -NH-,
Eₐ is H, (C₂-C₈)alkanoyl, benzoyl or phenylacetyl,
CO-N([CH₂]ₓ₋₁-CH₃)-CO-(C₁-C₄)alkyl,
CO-N([CH₂]ₓ₋₁-CH₃)-CO-C₆H₅ or CO-N([CH₂]ₓ₋₁-CH₃)-CO-CH₂-C₆H₅,
x is an integer from 5 to 11,
m is an integer from 30 to 200 and
n is an integer from 4 to 60; 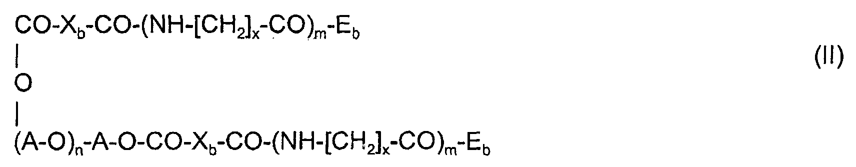
where
X_{b} is an alkanediyl radical of the formula -[CH₂]_{z}-,
where z is an integer from 4 to 10,
*meta*- or *para*-phenylene,
-NH-(C₁-C₆)alkyl-NH-,
-NH-C₆H₃-(CH₃)-NH-,
>N-[CH₂]ₓ₋₁-CH₃, -[CH₂]_{z}-CO-N([CH₂]ₓ₋₁-CH₃)- or -C₆H₄-CO-N([CH₂]ₓ₋₁-CH₃)-,
where C₆H₄ is *meta-* or *para*-phenylene,
E_{b} is -OH, -O-(C₁-C₇)alkyl, -O-phenyl or 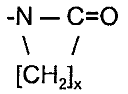
and
A, m and n have the meanings given above;
-[Xₐ-(CO-[CH₂]ₓ-NH)ₒ-Y-Xₐ-(A-O)ₚ-A]- (III)
where
Y is -CO-, -CO-[CH₂]_{z}-CO- or -CO-C₆H₄-CO-,
where C₆H₄ is *meta-* or *para*-phenylene, or is -CO-N([CH₂]ₓ₋₁-CH₃)-CO-,
-CO-N([CH₂]ₓ₋₁-CH₃)-CO-[CH₂]_{z}-CO-N([CH₂]ₓ₋₁-CH₃)-CO- or -CO-N([CH₂]ₓ₋₁-CH₃)-CO-C₆H₄-CO-N([CH₂]ₓ₋₁-CH₃)-CO-,
where C₆H₄ has the meanings specified,
o is an integer from 10 to 150 and
p is an integer from 4 to 100 and
A, Xₐ, x and z have the meanings given above.

2. The food casing as claimed in claim 1, wherein the hard polyamide blocks in the block copolymers of the formulae I to III have a glass transition temperature (T_{g}) of from 20 to 80°C and the soft polyether blocks have a T_{g} of from -100 to -20°C.

3. The food casing as claimed in claim 1 or 2, wherein the polyamide blocks are polycaprolactam blocks and the polyether blocks are poly(ethylene glycol) or poly(butylene glycol) blocks.

4. The food casing as claimed in claim 1 or 2, wherein, in the block copolymers of the formulae I and II, m is from 40 to 100 and n is from 10 to 40 and, in the block copolymers of the formula III, o is from 10 to 60 and p is from 20 to 40.

5. The food casing as claimed in one or more of claims 1 to 4, wherein the layer comprises at least one aliphatic and/or partially aromatic (co-)polyamide, mixed with the remaining constituents.

6. The food casing as claimed in claim 5, wherein the (co-)polyamide is nylon 6, nylon 6/6,6, nylon 6/12, nylon 12 or nylon 6I/6T.

7. The food casing as claimed in claim 5 or 6, wherein the proportion of the (co-)polyamide is up to 85% by weight, based on the total weight of the layer.

8. The food casing as claimed in one or more of claims 1 to 7, wherein the layer comprises inorganic or organic pigments.

9. The food casing as claimed in claim 1 or 2, which consists of multiple layers and the further layers consist of polyamides or polyolefins.

10. The food casing as claimed in claim 1 or 2, which has been stretched by blow-molding and extruded through a heated ring die.

11. The food casing as claimed in claim 1 or 2, which has an area stretching ratio of from about 6 to 10.

## Revendications

1. Boyau pour produits alimentaires étiré bi-axialement et fixé thermiquement, en forme de tuyau, sans couture, mono- ou multicouche, pour laquelle la couche, respectivement pour des boyaux multicouches au moins une des couches, contient un copolymère bloc avec des blocs polyamides aliphatiques « durs » et des blocs polyéthers aliphatiques « souples », qui correspondent à une des formules I à III:
Eₐ-(NH-[CH₂]ₓ-CO)ₘ-Xₐ-(A-O)ₙ-A-Xₐ-(CO-[CH₂]ₓ-NH)ₘ-Eₐ (I)
dans laquelle :
A est un reste alcane diyle de la formule -CH₂-CH₂- (= éthane-1,2-diyle), -CH₂-CH(CH₃)- (= propane-1,2-diyle), ou -(CH₂)₄- (= butane-1,4-diyle),
Xₐ est -O- ou -NH-
Eₐ est H₁ (C₂-C₈) alcanoyle, benzoyle ou phénylacétyle,
CO-N([CH₂]ₓ₋₁-CH₃)-CO-(C₁-C₄) alkyle,
CO-N([CH₂]ₓ₋₁-CH₃)-CO-C₆H₅ ou CO-N([CH₂]ₓ₋₁-CH₃)-CO-CH₂-C₆H₅,
x est un nombre entier de 5 à 11,
m est un nombre entier de 30 à 200 et
n est un nombre entier de 4 à 60 ; 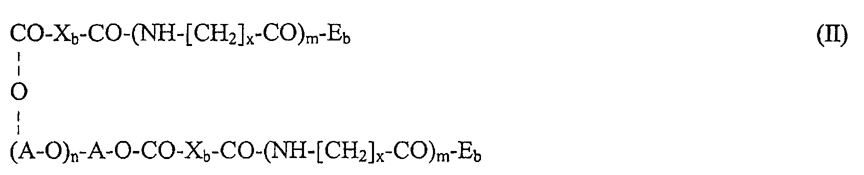
dans laquelle :
X_{b} est un reste alcane diyle de la formule -[CH₂]_{z}-,
z étant un nombre entier de 4 à 10,
un méta- ou para-phénylène,
-NH-(C₁-C₆) alkyle-NH-,
-NH-C₆H₃-(CH₃)-NH-, >N-[CH₂]ₓ₋₁-CH₃,-[CH₂]_{z}-CO-N([CH₂]ₓ₋₁-CH₃)-ou -C₆H₄-CO-N([CH₂]ₓ₋₁-CH₃)-,
où C₆H₄ représente un méta- ou un para-phénylène,
E_{b} est -OH, -O-(C₁-C₇) alkyle, -O-phényle ou 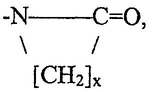 et
A, m et n ayant les significations précisées ci-avant ;
-[Xₐ-(CO-[CH₂]ₓ-NH)ₒ-Y-Xₐ-(A-O)ₚ-A]- (III)
dans laquelle :
Y est -CO-, -CO-[CH₂]_{z}-CO- ou -CO-C₆H₄-CO, C₆H₄ représentant un méta- ou un para-phénylène, ou -CO-N([CH₂]ₓ₋₁-CH₃)-CO-,
-CO-N([CH₂]ₓ₋₁-CH₃)-CO-[CH₂]_{z}-CO-N([CH₂]ₓ₋₁-CH₃)-CO-, ou -CO-N([CH₂]ₓ₋₁-CH₃)-CO-C₆H₄-CO-N([CH₂]ₓ₋₁-CH₃)-CO-, C₆H₄ ayant la signification précisée,
o est un nombre entier de 10 à 150 et
p est un nombre entier de 4 à 100 et
A, Xₐ, x et z ont les significations précisées ci-avant.

2. Boyau pour produits alimentaires selon la revendication 1, **caractérisé en ce que** les blocs de polyamide durs dans le copolymère bloc des formules I à III présentent une température de transition vitreuse (T_{g}) de 20 à 80 °C et les blocs de polyéther souples une T_{g} de -100 à -20 °C.

3. Boyau pour produits alimentaires selon la revendication 1 ou 2, **caractérisé en ce que** les blocs de polyamide sont des blocs de polycaprolactame et les blocs de polyéther des blocs de polyéthylène glycol ou de polybutylène glycol.

4. Boyau pour produits alimentaires selon la revendication 1 ou 2, **caractérisé en ce que**, dans les copolymères bloc des formules I et II, on a m = 40 à 100 et n = 10 à 40, et dans le copolymère bloc de la formule III, on a o = 10 à 60 et p = 20 à 40.

5. Boyau pour produits alimentaires selon une ou plusieurs des revendications 1 à 4, **caractérisé en ce que** la couche contient au moins un (co-)polyamide aliphatique et /ou partiellement aromatique, mélangé aux autres composants.

6. Boyau pour produits alimentaires selon la revendication 5, **caractérisé en ce que** le le co-polyamide est un polyamide-6, un polyamide-6/6,6 un polyamide-6/12, un polyamide-12 ou un polyamide-6I/6T.

7. Boyau pour produits alimentaires selon la revendication 5 ou 6, **caractérisé en ce que** la proportion du co-polyamide peut atteindre jusqu'à 85 % en poids, rapporté au poids total de la couche.

8. Boyau pour produits alimentaires selon une ou plusieurs des revendications 1 à 7, **caractérisé en ce que** la couche contient des pigments organiques ou inorganiques.

9. Boyau pour produits alimentaires selon la revendication 1 ou 2, **caractérisé en ce qu'**elle est multicouche et que les autres couches consistent en polyamides ou en polyoléfines.

10. Boyau pour produits alimentaires selon la revendication 1 ou 2, **caractérisé en ce qu'**elle est étirée par soufflage et qu'elle est extrudée à travers une filière annulaire chauffée.

11. Boyau pour produits alimentaires selon la revendication 1 ou 2, **caractérisé en ce qu'**elle présente un rapport surfacique d'étirement d' environ 6 à 10.
